# FASCICULE DE BREVET EUROPEEN

(11) **EP 1 014 497 B1**
(45) Date de publication et mention de la délivrance du brevet: **26.03.2003**
(21) Numéro de dépôt: 99403104.5
(22) Date de dépôt: 09.12.1999
(51) Int. Cl.: H01R 4/62

(54) **Connection électrique de barres omnibus**
Elektrische Verbindung für Sammelschiene
Busbar electrical connection

(30) Priorité: 14.12.1998 FR 9815793
(43) Date de publication de la demande: 28.06.2000
(73) Titulaire: Schneider Electric Industries SAS, 92500 Rueil-Malmaison (FR)
(72) Inventeur: Becker,Franck, 21110 Genlis (FR)

(56) Documents cités:
- FR-A- 1 599 973
- FR-A- 2 397 723
- GB-A- 2 034 536
- US-A- 4 181 396
- US-A- 5 514 436
- VEERKAMP W E: "COPPER-TO-ALUMINUM TRANSITIONS IN HIGH DIRECT-CURRENT BUS SYSTEMS" INDUSTRY APPLICATIONS SOCIETY 42ND. ANNUAL PETROLEUM AND CHEMICAL INDUSTRY CONFERENCE, DENVER, SEPT. 11 - 13, 1995, no. CONF. 42, 11 septembre 1995 (1995-09-11), pages 187-195, XP000557769 INSTITUTE OF ELECTRICAL AND ELECTRONICS ENGINEERS ISBN: 0-7803-2693-8

## Description

La présente invention concerne une barre de canalisation de distribution électrique comprenant d'une part un profilé en aluminium de section droite plate qui s'étend selon une direction principale et une direction transversale, et d'autre part au moins une pièce de liaison métallique, cette pièce étant mise en contact intime avec le profilé. La pièce de liaison peut être soit une pièce de contact propre à assurer une prise de contact de dérivation électrique ou d'interconnexion avec une autre barre, soit un profilé en aluminium prolongeant en ligne droite ou par un coude le profilé considéré.

Il existe de nombreux exemples de telles barres, destinées à des canalisations de distribution électrique de moyenne ou forte puissance. Ainsi le brevet FR-1 599 973 décrit un procédé de transfert d'une pièce de contact en cuivre dans une barre en aluminium par poinçonnage direct de celle-ci. Comme on le sait, l'aluminium est avantageux pour élaborer de telles barres, car il est moins onéreux que le cuivre ; mais comme il est moins bon conducteur que le cuivre, les surfaces de contact à prévoir aux endroits de dérivation ou d'éclissage de la canalisation doivent impérativement être réalisés au moyen de pièces ou de couches de cuivre rapportées au moins localement.

D'autre part, il est souhaitable de rendre solidaire d'une barre de distribution électrique en aluminium des pièces de dérivation ou d'éclissage en cuivre, aluminium ou autre métal ou alliage approprié, ou une barre d'angle en aluminium, en constituant un assemblage mécaniquement très résistant.

La présente invention vise à permettre de rapporter au profilé en aluminium, de manière simple, électriquement fiable et mécaniquement résistante, une pièce de liaison telle qu'une pièce de contact ou un autre profilé.

Selon l'invention, la pièce métallique de liaison est assemblée au profilé par plusieurs lobes de forme complémentaire, prévus aux bords de la pièce métallique et du profilé et alignés suivant une direction appartenant au plan défini par les directions principale et transversale du profilé, les lobes étant mutuellement imbriqués par emboîtement transversal audit plan et présentant une tête et un col, le col ayant une largeur inférieure à la largeur de la tête pour ménager une résistance de l'assemblage à la traction les lobes du profilé et/ou de la pièce de liaison étant emboutis après mise en place. De préférence, la pièce métallique de liaison présente une hauteur identique à celle du profilé et les lobes ont un contour sinueux en méandres. Selon les cas, la pièce métallique de liaison est une pièce de contact à fonction de dérivation ou d'éclissage ou un profilé en aluminium assurant une prolongation par exemple coudée de la barre. Les lobes du profilé et/ou de la pièce de liaison sont emboutis après imbrication des lobes de la pièce de liaison dans ceux du profilé pour obtenir un filage des têtes d'une rangée de lobes emboutis dans les creux de la rangée de lobes complémentaires en regard. Les traces d'emboutissage sur les lobes peuvent avoir la forme de cuvettes ou de cônes.

Lorsque la pièce de liaison est une pièce de contact, elle peut avantageusement être en cuivre, une brasure de point de fusion supérieur à environ 500° étant déposée sur l'interstice sinueux entre lobes en regard du profilé et de la pièce de contact.

La description qui suit, en regard des dessins annexés à titre non limitatif, permettra de bien comprendre l'invention

La figure 1 représente en vue de face une barre conforme à l'invention avant assemblage.

La figure 2 représente la même barre après assemblage.

La figure 3 en est une vue de côté.

Les figures 4 à 7 montrent en perspective différentes formes d'exécution de l'invention.

La figure montre en perspective des variantes de réalisation.

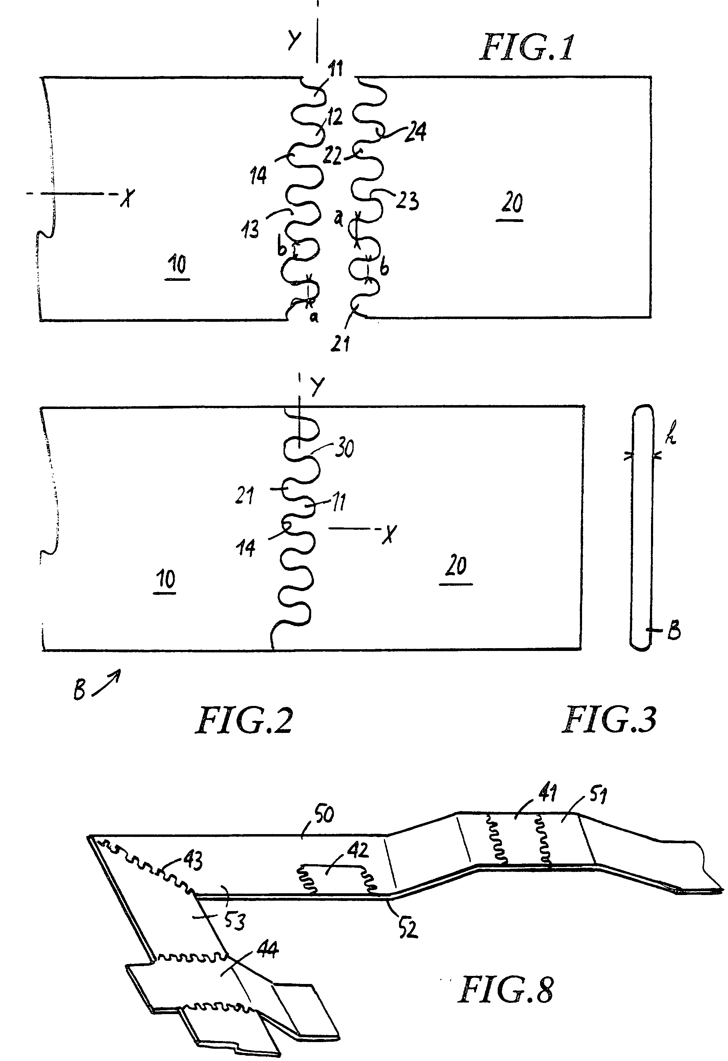

La barre B illustrée sur les figures 1 à 3 est destinée à être incorporée à une canalisation préfabriquée de distribution électrique de puissance, pour conduire des courants de l'ordre de quelques centaines ou milliers d'ampères par exemple. La barre comprend d'une part un profilé en aluminium 10 qui offre une section droite plate (voir figure 3) et s'étend selon une direction principale X, d'autre part, en diverses zones de dérivation ou à ses extrémités, des pièces de contact en cuivre 20 prévues pour assurer en ces endroits une prise de contact électriquement satisfaisante avec une pièce de connexion.

Comme on le sait, une telle pièce de connexion est propre à un conducteur ou à un coffret de dérivation ou, respectivement, propre à un élément d'éclissage qui assure le raccordement avec une autre barre prolongeant la barre considérée ; cette pièce de connexion n'est pas représentée sur les figures, mais pourrait par exemple être constituée par une pince. La pièce de contact a une hauteur h identique à celle de la barre. Dans l'exemple indiqué, la pièce de contact est prévue en bout de la barre ; elle peut aussi être située latéralement ou dans le corps de la barre.

Le profilé 10 comporte, en alignement selon une ligne Y perpendiculaire à X, plusieurs lobes saillants 11 présentant chacun une tête 12 de largeur a et un col 13 de largeur b inférieure à a. Les divers lobes peuvent avoir une forme différente dans la forme d'exécution représentée, ils ont une forme identique. Les lobes 11 sont séparés par des creux 14 adaptés à recevoir par imbrication les lobes complémentaires 21 de la pièce de contact 20. L'interstice d'assemblage est en forme de méandres.

Les lobes 21 de la pièce 20 sont eux aussi alignés et séparés par des creux 24 et comprennent des têtes 22 de largeur a et des cols 23 de largeur b et, une fois que la pièce 20 est assemblée au profilé 10 (figure 2), sont alignés selon la ligne Y. Les lobes 21 et les creux 24 ont une forme complémentaire de celle des creux 14 et respectivement des lobes 11.

Après emboîtement mutuel des lobes en regard 11,21, par introduction selon une direction perpendiculaire au plan de la barre, une brasure de point de fusion supérieur à environ 500° peut être déposée sur l'interstice 30 à sinuosités en méandres entre lobes 11,21 pour en assurer l'étanchéité et contribuer à la rigidité mécanique de l'assemblage.

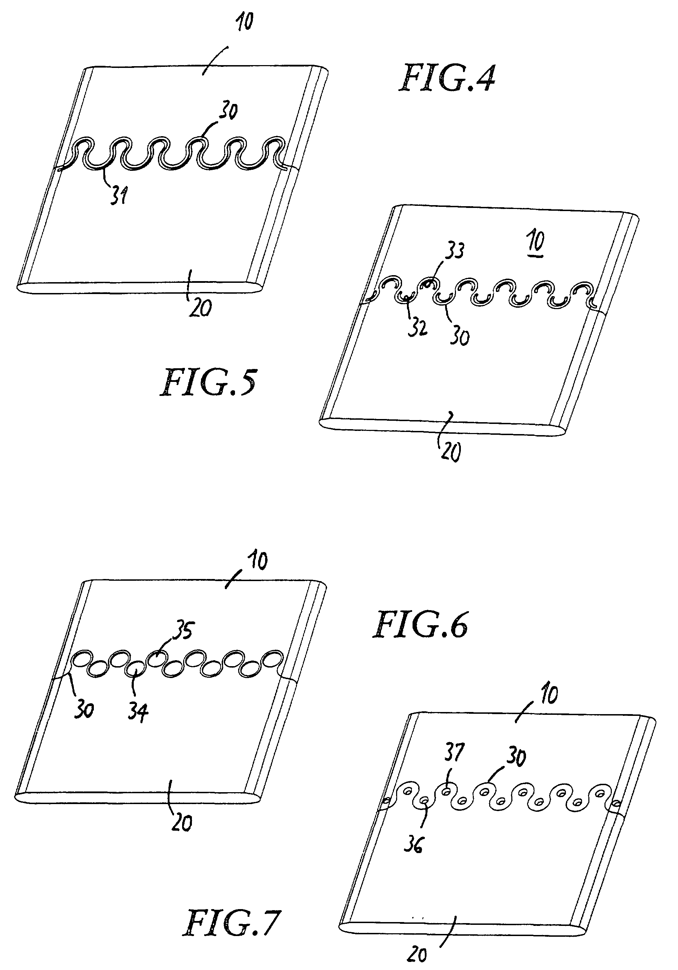

L'opération d'emboîtement est complétée par une opération d'emboutissage exécutée sur les lobes. L'emboutissage peut être effectué sur une seule des pièces à accoupler, par exemple le profilé (voir figure 4), au moyen d'un poinçon dont le profil 31 épouse celui des lobes ; de préférence, il est effectué sur des zones ou lignes d'emboutissage 32,33 du profilé 10 et la pièce de contact 20 D'une autre manière, les zones d'emboutissage ont la forme de cuvettes 34;35 sensiblement circulaires ou elliptiques épousant la forme des lobes (figure 6) ou de cônes 36,37 positionnés au centre des lobes respectifs. La profondeur des cuvettes ou des cônes peut être différenciée dans le profilé 10 et dans la pièce de contact 20, pour tenir compte de la différence de leurs matériaux. La pièce de contact pourrait en variante être en aluminium.

La figure 8 illustre diverses possibilités de réalisation de barres offertes par l'invention : insertion d'une plage d'éclissage 41 sur une partie déportée 51 d'un profilé 50, insertion d'une plage de dérivation 42 sur le bord 52 du profilé, aboutement en équerre en 43 pour des tronçons 53 de barre à raccorder en équerre pour donner à la barre une forme coudée , insertion d'une plage de dérivation 44 qui s'étend transversalement au-delà des deux bords du profilé.

## Revendications

1. Barre de canalisation de distribution électrique comprenant d'une part un profilé en aluminium (10) offrant une section droite plate qui s'étend selon une direction principale (X) et une direction transversale (Y), et d'autre part au moins une pièce métallique de liaison (20), cette pièce étant mise en contact intime avec le profilé,
***caractérisée par le fait que*** la pièce métallique de liaison (20) est assemblée au profilé (10) par plusieurs lobes (11,21) de forme complémentaire, prévus sur la pièce de liaison et le profilé et alignés suivant une direction appartenant au plan du profilé défini par les directions (X) et (Y), les lobes étant mutuellement imbriqués par emboîtement transversal au plan du profilé et présentant une tête (12,22) de largeur a et un col (13,23) de largeur b inférieure à la largeur a de manière à ménager une résistance de l'assemblage à la traction, et
***par le fait que*** les lobes (11,21) du profilé (10) et/ou de la pièce de liaison (20) sont emboutis après mise en place.

2. Barre selon la revendication 1, ***caractérisée par le fait que*** les traces d'emboutissage sur les lobes ont la forme de cuvettes (34,35).

3. Barre selon la revendication 1, ***caractérisée par le fait que*** les traces d'emboutissage sur les lobes ont la forme de cônes (36,37).

4. Barre selon la revendication 1, ***caractérisée par le fait que*** la pièce de liaison (20) est en cuivre et qu'une brasure de point de fusion supérieur à environ 500° est déposée sur l'interstice entre lobes en regard (11,21) du profilé et de la pièce de liaison.

5. Barre selon la revendication *1, **caractérisée par le fait que*** la hauteur (h) de la pièce de liaison (20) est identique à celle du profilé (10).

6. Barre selon la revendication 1, ***caractérisée par le fait que*** les lobes (11,21) du profilé et de la pièce de liaison ont une forme de sinuosités en méandres.

## Claims

1. An electricity distribution bar comprising on the one hand, an aluminum profile 10 which extends along a main direction (x), and on the other hand at least one metal connecting component (20), this component being brought into intimate contact with the profile, **characterized by** the fact that, the metal connecting component (20) is assembled with the profile (10) by several lobes (11, 21) which are aligned and of complementary shape, provided on the connecting component and the profile, the lobes being mutually interlocked by stamping in a direction transverse to the plane of the profile and having a head (12, 22) of width a and a neck (13, 23) of width b less than the width a in such a way that the assembly is provided with resistance to tensile forces, and
by the fact that the lobes (11, 21) of the profile (10) and/or of the connecting component (20) are stamped after being put into position.

2. Bar according to Claim 1 **characterized by** the fact that the stamping marks on the lobes are dish-shaped (34, 35).

3. Bar according to Claim 1 **characterized by** the fact that the stamping marks on the lobes are cone-shaped.

4. Bar according to Claim 1 **characterized by** the fact that the connecting component (20) is made of copper and that a brazing solder with a melting point greater than about 500° is deposited on the joint line between opposite lobes (11, 21) of the profile and the connecting component.

5. Bar according to Claim 1 **characterized by** the fact that the height (h) of the connecting component (20) is identical to that of the profile (10).

6. Bar according to Claim 1 **characterized by** the fact that the lobes (11, 21) of the profile and the connecting component have a winding shape.

## Patentansprüche

1. Sammelschiene für die elektrische Stromverteilung, die einerseits aus einem Aluminiumprofil (10) mit einer ebenen Querschnittsfläche, die sich entlang einer Hauptrichtung (X) und einer Querrichtung (Y) erstreckt, und andererseits aus zumindest einem metallischen Verbindungsstück (20) besteht, das fest mit dem Profil verbunden wird,
**dadurch gekennzeichnet, dass** ein Metall-Verbindungsstück (20), das an das Profil (10) durch mehrere Lappen (11,21) mit komplementärer Form montiert wird, die sich auf dem Verbindungsstück und dem Profil in einer Reihe, entlang einer Richtung in der Ebene des Profils, die durch die Richtungen (X) und (Y) bestimmt wird, befinden und wobei die Lappen durch Einfügung quer zur Profilebene miteinander verzahnt werden und einen Kopf (12,22) der Breite a und einen Hals (13,23). der Breite b, die geringer ist als die Breite a in der Weise, dass die Zugwiderstandfähigkeit der Montage erhöht wird, und
dadurch, dass die Lappen (11,21) des Profils (10) und/oder des Verbindungsstücks (20) nach der Installation zusammengepresst werden.

2. Schiene nach Anspruch 1, **dadurch gekennzeichnet, dass** die Spuren des Pressens auf den Lappen die Form von Aushöhlungen (34,35) haben.

3. Schiene nach Anspruch 1, **dadurch gekennzeichnet, dass** die Spuren des Pressens auf den Lappen die Form von Kegeln (36,37) haben.

4. Schiene nach Anspruch 1, **dadurch gekennzeichnet, dass** das Verbindungsstück (20) aus Kupfer ist und dass eine Lötstelle mit einem höheren Schmelzpunkt von ca. 500° auf den Zwischenraum zwischen den gegenüberliegenden Lappen (11, 21) des Profils und des Verbindungsstücks aufgebracht wird.

5. Schiene nach Anspruch 1, ***dadurch* gekennzeichnet, dass** die Höhe (h) des Verbindungsstücks (20) identisch mit der des Profils (10) ist.

6. Schiene nach Anspruch 1, **dadurch gekennzeichnet, dass** die Lappen (11,21) des Profils und des Verbindungsstücks eine mäanderförmige Bogenform haben.
